# EUROPEAN PATENT SPECIFICATION

(11) **EP 3 829 898 B1**
(45) Date of publication and mention of the grant of the patent: **20.07.2022**
(21) Application number: 19755973.5
(22) Date of filing: 01.08.2019
(51) Int. Cl.: B60C 9/00, B60C 9/20, B60C 9/22, D02G 3/48, D07B 1/00, D07B 1/06

(54) **TYRE FOR VEHICLE WHEELS**
REIFEN FÜR FAHRZEUGRÄDER
PNEU POUR ROUES DE VÉHICULE

(30) Priority: 03.08.2018 IT 201800007850
(43) Date of publication of application: 09.06.2021
(73) Proprietor: Pirelli Tyre S.p.A., 20126 Milano (IT)
(72) Inventor: AGRESTI, Simone, 20126 Milano (IT); DAGHINI, Guido Luigi, 20126 Milano (IT); RAMPANA, Barbara, 20126 Milano (IT); MONDOLO, Amedeo, 20126 Milano (IT)
(74) Representative: Porta & Consulenti Associati S.p.A.
(86) International application number: PCT/IB2019/056554
(87) International publication number: WO 2020/026178

(56) References cited:
- EP-A1- 0 621 143
- WO-A1-2013/098738
- DE-B3- 10 225 699
- JP-A- 2010 242 253
- US-A- 3 756 883
- US-A- 4 176 705
- US-A1- 2013 042 593
- US-A1- 2015 314 644

## Description

The present invention relates to a tyre for vehicle wheels.

The tyre of the invention is, preferably, a tyre for wheels of sports automobiles, in particular high and ultra high-performance automobiles.

Tyres for high and ultra high-performance automobiles, commonly defined as "HP" or "UHP" tyres, are in particular those that allows speeds of over 200 km/h, up to more than 300 km/h, to be reached. Examples of such tyres are those belonging to classes "T", "U", "H", "V", "Z","W", "Y", according to the E.T.R.T.O. standard - (European Tyre and Rim Technical Organisation) and racing tyres, in particular for high piston displacement four-wheeled vehicles. Typically, tyres belonging to such classes have a section width equal to or greater than 185 mm, preferably comprised between 195 mm and 385 mm, more preferably comprised between 195 mm and 355 mm. Such tyres are preferably mounted on rims having fitting diameters equal to or greater than 13 inches, preferably not greater than 24 inches, more preferably comprised between 16 inches and 23 inches.

The tyre of the invention can however be used in vehicles different from the aforementioned automobiles, for example in high-performance sports motorcycles.

### PRIOR ART

JP H6-297905 describes a radial tyre comprising an additional radially outer zero degrees reinforcing layer including a hybrid reinforcing cord formed by winding together, around a core comprising organic fibers, from 2 to 5 metallic wires arranged adjacent to one another along the circumferential surface of the core.

WO 2013/098738, in the name of the Applicant, describes a tyre for motor vehicles comprising a belt structure of the zero degrees type comprising at least one reinforcing cord having a core made of non-metallic material and a plurality of metallic wires substantially parallel to one another and helically wound around the core with a predetermined winding pitch. The metallic wires are in a number such as not to completely surround the core. In US3756883 a tyre is disclosed, in which a pair of crossing belt layers is made by hybrid cords, in which a textile core is surrounded by two steel wires.

Reinforcing cords intended to be used in tyres and comprising a core made of non-metallic material and one or more metallic wires wound around the core are described for example also in DE 102004036129, US 2009/0294029, US 2015/0233027, WO 2009/073761, US 2012/0180926, US 7594380, US 8166741, EP 621143, US 3977174, US 2003/0051788, JP 2010242253 A, US 3756883 A, US 4176705 A, DE 10225699 B3.

### SUMMARY OF THE INVENTION

Throughout the present description and in the following claims, when reference is made to certain values of certain angles, absolute values are intended, i.e. both positive values and negative values with respect to a reference plane or direction, except where specified otherwise.

Moreover, when reference is made to any range of values comprised between a minimum value and a maximum value, the aforementioned minimum and maximum values are intended to be included in the aforementioned range.

Hereinafter the following definitions apply.

The term "equatorial plane" of the tyre is used to indicate a plane perpendicular to the rotation axis of the tyre and that divides the tyre into two symmetrically identical parts.

The terms "radial" and "axial" and the expressions "radially inner/outer" and "axially inner/outer" are used with reference respectively to a direction substantially parallel and to a direction substantially perpendicular to the equatorial plane of the tyre, i.e. to a direction substantially perpendicular and to a direction substantially parallel to the rotation axis of the tyre, respectively.

The terms "circumferential" and "circumferentially" are used with reference to the direction of annular extension of the tyre, i.e. to the rolling direction of the tyre, which corresponds to a direction lying on a plane coinciding with or substantially parallel to the equatorial plane of the tyre.

The term "substantially axial direction" is used to indicate a direction inclined, with respect to the equatorial plane of the tyre, by an angle comprised between about 70° and about 90°.

The term "substantially circumferential direction" is used to indicate a direction oriented, with respect to the equatorial plane of the tyre, at an angle comprised between about 0° and about 10°.

The term "elastomeric material" or "elastomer" is used herein to indicate a material comprising a synthetic or natural polymer which can be vulcanized and a reinforcing filler, which, at room temperature, after having been vulcanized, can be subjected to deformations caused by a force and is capable of quickly and energetically recovering substantially the original shape and size after the elimination of the deforming force (according to the definitions of standard ASTM D1566-11 Standard Terminology Relating To Rubber).

The expression "reinforcing cord", or more simply "cord" is used to indicate an element consisting of one or more elongated elements (hereinafter also called "wires") possibly coated with, or incorporated in, a matrix of elastomeric material.

In the case of non-metallic material, the term "elongated element" or "wire" or "thread" is used to indicate the aggregation of a plurality of fibers (such fibers can also be indicated with the term "filaments").

The expression "hybrid reinforcing cord" is used to indicate a reinforcing cord comprising at least one wire made of at least one metallic material, and at least one other wire made of at least one textile material.

The expression "non-hybrid reinforcing cord" is used to indicate a reinforcing cord whose wires are all made of the same material.

The expression "tangent modulus" of a material is used to indicate the ratio between load and elongation measured at any point of a load-elongation curve obtained by carrying out a traction test according to the standard BISFA (Bureau International pour la Standardisation des Fibres Artificielles) on a wire made of that material. Such a modulus is obtained by calculating the first derivative of the load-elongation function that defines the aforementioned curve, normalized to the linear density expressed in Tex. The modulus is therefore expressed in cN/Tex.

The expression "initial tangent modulus" is used to indicate the tangent modulus calculated at the origin point of the load-elongation curve, i.e. for an elongation equal to zero.

The term "high modulus" is used to indicate an initial tangent modulus equal to or greater than 2000 cN/Tex.

The term "diameter" of a reinforcing cord or of a wire is used to indicate the diameter measured as prescribed by the method BISFA E10 (The International Bureau For The Standardization Of Man-Made Fibres, Internationally Agreed Methods For Testing Steel Tyre Cords, 1995 edition).

In the case of non-metallic wires, the term "diameter" of a wire is used to indicate the diameter of an ideal circumference that circumscribes all of the filaments that define the wire.

The term "radial carcass structure" is used to indicate a carcass structure comprising a plurality of elongated reinforcing elements each of which is oriented along a substantially axial direction. Such elongated reinforcing elements can be incorporated in a single carcass layer or in many carcass layers (preferably two) radially juxtaposed one to the other.

The term "crossed belt structure" is used to indicate a belt structure comprising a first belt layer including reinforcing cords substantially parallel to each other and inclined with respect to the equatorial plane of the tyre by a predetermined angle and at least one second belt layer arranged in radially outer position with respect to the first belt layer and including reinforcing cords substantially parallel to each other but orientated with opposite inclination to the cords of the first layer with respect to the equatorial plane of the tyre.

The term "zero degrees belt layer" is used to indicate a reinforcing layer comprising at least one reinforcing cord wound on the belt structure according to a substantially circumferential winding direction.

The term "linear density" or "count" of a cord or of a wire or of a fiber is used to indicate the weight of the cord or of the wire or of the fiber per unit length. The linear density is measurable in dtex (grams per 10 km of length). For the measurement of the linear density reference is made to flat wires, without twists applied in the test stage or in the twisting stage, according to the tests regulated by BISFA. For example, reference is made to:
for aramid fibers (AR):
   - Testing methods for para-aramid fibre yarns, 2002 Edition,
      - Determination of the linear density - Chapter 6
      - Determination of the tensile properties - Chapter 7 - Test procedure - Paragraph 7.5 - with procedure with initial pretensioning;
for lyocell fibers:
   - Determination of the linear density - Chapter 6
   - Testing methods for viscose, cupro, acetate, triacetate and lyocell filament yarns - 2007 Edition, Determination of tensile properties - Chapter 7 - Tensile test conditions: oven dry test - Table 7.1 - Test procedure - Paragraph 7.5 - With oven dry test on relaxed samples - Subparagraph 7.5.2.4.

The expression "elongation at break" of a reinforcing cord is used to indicate the percentage elongation at which breaking occurs, evaluated with the method BISFA E6 (The International Bureau For The Standardization Of Man-Made Fibres, Internationally Agreed Methods For Testing Steel Tyre Cords, edition of 1995).

The expression "breaking load" of a reinforcing cord is used to indicate the load at which breaking occurs, evaluated with the aforementioned method BISFA E6 thus modified to take into account the presence in the cord both of textile wires and of metallic wires: a Zwick dynamometer, a 50 KN load cell and a test piece of length equal to 500 mm are used. The clamps are arranged at a distance of 320 mm and a preload of 5 N is applied. The speed to reach the preload is set at 10 mm/minute and the traction speed is set at 100 mm/minute.

The reinforcing cords can be obtained through one or more thread-like reinforcing elements, or "yarns", to form the reinforcing cord, where the term "yarn" is used to indicate a bundle of fibers twisted together. Preferably, there is one yarn or at least two yarns twisted together.

The reinforcing textile cords can be identified with a symbol that represents the textile material, the count of the fiber used and the number of yarns that combine to form the reinforcing cord. For example, a reinforcing cord with aramid (aromatic polyamide) yarns identified as Ar1672 indicates a cord comprising aramid fibers with count 1670 dTex, formed of two yarns twisted together.

Tyres for sports automobiles need a high capability to adhere to the ground, so as to be able to effectively discharge to the ground the high drive torque which they are subjected to and, thus, achieve a high thrust and an effective braking force. Such tyres must also be light and provide for an adequate response to lateral forces in bends.

Tyres for sports automobiles typically comprise a radial carcass structure extending between opposite bead structures, a crossed belt structure arranged in a radially outer position with respect to the carcass structure, a zero degrees reinforcing layer arranged in a radially outer position with respect to the crossed belt structure and a tread band arranged in a radially outer position with respect to the zero degrees reinforcing layer.

The Applicant has been producing for a long time tyres for sports automobiles in which the layers of the crossed belt structure comprise metallic reinforcing cords. Such reinforcing cords allow the aforementioned tyres to ensure the desired performance in terms of thrust, braking and response to lateral stresses in bends.

In line with the general tendency to reduce CO₂ emissions into the atmosphere, the Applicant has considered the problem of reducing the rolling resistance of its tyres, including tyres for sports automobiles.

The Applicant has thus thought to reduce the weight of the reinforcing cords used in the belt structure.

The Applicant has however observed that, during the travel of the tyre, the reinforcing cords of the belt structure are subjected to high compression stresses and that a reduction of their weight could lead to problems of instability of the reinforcing cords, which become evident with a sudden collapse of the reinforcing cords, typically identified with the term "buckling".

The Applicant has therefore felt the need to use reinforcing cords that are capable not only of ensuring the desired lightness and the desired performance in terms of thrust, braking and response to the lateral stresses in bends, but also of withstanding high compression stresses without buckling.

The Applicant has realized that it is possible to satisfy such a requirement by using, in the layers of the crossed belt structure, hybrid reinforcing cords having a core made of a high modulus textile material and a plurality of metallic wires wound around the core with a predetermined winding pitch.

With reference to the core, the Applicant has verified that the core made of textile material surrounded by the plurality of metallic wires allows an effective absorption or damping of the deformations induced by the high compression stresses without buckling. Moreover, the high modulus textile material has a high rigidity and thus contributes, although to a lesser extent than the metallic wires, to provide the reinforcing cord with the desired rigidity.

With reference to metallic wires, the Applicant has deemed that in order to achieve the desired performance of the tyre, without at the same time increasing the weight of the tyre and risking buckling, it is appropriate to arrange the metallic wires around the core so as not to completely surround the core itself and, more in particular, so that, in any cross section of the hybrid reinforcing cord, they are located at only one angular portion of an ideal circumference that circumscribes the core. The Applicant has indeed verified that such an arrangement of the metallic wires ensures that the reinforcing cord has the rigidity typically required to the reinforcing cords of the layers of a crossed belt structure. The desired rigidity can also be achieved by providing a limited number of metallic wires, a circumstance which, together with the use of a core made of textile material, makes it possible to achieve the desired lightness.

Ultimately, the Applicant has found that a hybrid reinforcing cord having a core made of a high modulus textile material and, around the core, a helical winding of metallic wires as described above, when used in the layers of a crossed belt structure of a sports tyre, makes it possible to provide the tyre with the desired lightness and the desired performance in terms of thrust, braking and response to the lateral stresses in bends, obtaining the desired improvement in terms of rolling resistance with respect to those cases in which metallic reinforcing cords are used in the crossed belt structure, like in tyres currently produced by the Applicant for being used in sports automobiles.

The present invention relates to a tyre for vehicle wheels according to claim 1.

The Applicant believes that the hybrid reinforcing cords described above can be used in both the layers of the crossed belt structure or in only one of the aforementioned two belt layers, the other belt layer comprising non-hybrid reinforcing cords made of textile or metallic material. It is also possible to use in the same belt layer both hybrid reinforcing cords of the type described above and non-hybrid reinforcing cords made of textile or metallic material.

The Applicant also believes that the hybrid reinforcing cords described above can be used in other parts of the tyre, and in particular in all those parts that are subjected to compression stresses, like for example the components of the tyre that are described below and are indicated as "flipper" and "chafer".

In particular, the hybrid reinforcing cords described above can be used both in the crossed belt structure and in one or both of the flipper and chafer components (if provided), or only in one or both of the flipper and chafer components, in the case in which the tyre is not provided with a crossed belt structure or is provided with a belt structure comprising only metallic or textile non-hybrid reinforcing cords, i.e. with no hybrid reinforcing cords of the type described above.

The Applicant also believes that the hybrid reinforcing cords described above can be used in tyres of all types of vehicles where high performance is required, thus not only in sports automobiles but also for example in sports motorcycles.

In first preferred embodiments, the core comprises textile fibers joined to one another to define a single elongated element twisted on itself with a predetermined twisting pitch.

In second preferred embodiments, the core comprises textile fibers joined to one another to define a plurality of thread-like elements (or yarns) twisted together with a predetermined twisting pitch.

The provision of many yarns twisted together results in a small increase in the diameter of the core made of textile material with respect to the solution in which the core comprises a single yarn twisted on itself, with consequent increase in the capability of the reinforcing cord to withstand the compression stresses. A greater spacing of the metallic wires is also obtained with consequent increase in the rigidity of the reinforcing cord.

In preferred embodiments, the aforementioned elongated elements are two or three, more preferably two.

Preferably, each elongated element has a linear density greater than or equal to about 800 dTex, more preferably greater than or equal to about 1100 dTex, even more preferably greater than or equal to about 1600 dTex.

Preferably, each elongated element has a linear density lower than or equal to about 4400 dTex, more preferably, lower than or equal to about 3800 dTex, even more preferably lower than or equal to about 3200 dTex.

In preferred embodiments, each elongated element has a linear density comprised between about 800 dTex and about 4400 dTex, more preferably between about 1100 dTex and about 3800 dTex, even more preferably between about 1600 dTex and about 3200 dTex.

Preferably, the aforementioned textile fibers are selected from the group comprising aramid, lyocell or glass fibers or assemblies of fibers comprising at least 30% of aramid, lyocell or glass fibers and not more than 70% of nylon, rayon or polyethylene terephthalate fibers (PET). Such assemblies of fibers are indicated hereinafter with the term "commingled fibers".

In first embodiments of the core, the textile fibers can be made of aramid with linear density equal to about 1110 dTex. The initial tangent modulus in this case is equal to about 6500 cN/Tex.

In the case of "commingled fibers", the textile fibers can for example comprise:
- 50% of aramid with linear density equal to about 1100 dTex and 50% of PET with linear density equal to about 1100 dTex (such an assembly is indicated hereinafter as "Commingled 2200 dTex");
- 43% of aramid with linear density equal to about 840 dTex and 57% of PET with linear density equal to about 1100 dTex (such an assembly is indicated hereinafter as "Commingled 1940 dTex");
- 33% of aramid with linear density equal to about 550 dTex and 67% of PET with linear density equal to about 1100 dTex (such an assembly is indicated hereinafter as "Commingled 1650 dTex").

Commingled 2200 dTex has an initial tangent modulus equal to about 3300 CN/Tex.

Commingled 1940 dTex has an initial tangent modulus equal to about 2800 CN/Tex.

Commingled 1650 dTex has an initial tangent modulus equal to about 2500 CN/Tex.

Preferably, the number of twists of the single elongated element twisted on itself or of the plurality of elongated elements twisted together is greater than about 100 tpm (twists per meter), more preferably greater than about 200 tpm.

Preferably, the number of twists of the single wire twisted on itself or of the plurality of wires twisted together is lower than about 500 tpm, more preferably lower than about 400 tpm.

In preferred embodiments, the number of twists of the single wire twisted on itself or of the plurality of wires twisted together is comprised between about 100 tmp and about 500 tpm, preferably between about 200 tpm and about 400 tpm, for example equal to about 300 tpm.

Preferably, the twisting pitch is smaller than the winding pitch. The Applicant has observed that such a provision makes it possible to optimize the compression fatigue of the core.

The twisting direction of the aforementioned textile fibers may or may not be coherent with the winding direction of the metallic wires.

Preferably, the twisting direction of the aforementioned textile fibers is the same as the winding direction of the metallic wires.

Preferably, the winding pitch is lower than or equal to about 6.3 mm, more preferably lower than or equal to about 6 mm, even more preferably lower than or equal to about 4.5 mm.

Preferably, the winding pitch is greater than or equal to about 2.0 mm, more preferably greater than or equal to about 2.5 mm, even more preferably greater than or equal to about 3.5 mm.

In preferred embodiments, the winding pitch is comprised between about 2 mm and about 6.3 mm, more preferably between about 2.5 mm and about 6 mm, even more preferably between about 3.5 mm and about 4.5 mm, for example equal to about 4.3 mm or to about 3.7 mm.

The Applicant has observed that the provision of a winding pitch within one of the aforementioned ranges of values makes it possible to obtain a reinforcing cord having an elastic modulus suitable for the use of such a reinforcing cord in a crossed belt structure of a sports tyre.

Preferably, said hybrid reinforcing cord comprises, at a surface portion thereof extending along said predetermined longitudinal direction, first longitudinal segments without said metallic wires and second longitudinal segments comprising said metallic wires.

Preferably, each of said first longitudinal segments is arranged between two respective second longitudinal segments.

Preferably, each of said first longitudinal segments has a length along said predetermined longitudinal direction greater than the length of each of the second longitudinal segments.

The Applicant has observed that it is preferable that the first longitudinal segments have a reduced length, so as to increase, once the number and the diameter of the metallic wires and the diameter of the core made of textile material have been defined, the number of windings of metallic wires for a predetermined winding pitch and, consequently, the rigidity of the reinforcing cord, in such a way obtaining from the reinforcing cords used in the crossed belt structures the expected performance in terms of thrust, braking and contrast to the lateral stresses in bends.

Preferably, the length of each of said first longitudinal segments is lower than about 6 mm, more preferably lower than or equal to about 5.55 mm.

Preferably, the length of the first longitudinal segments is greater than about 2 mm, more preferably greater than or equal to about 2.5 mm.

In preferred embodiments, the length of the first longitudinal segments is comprised between about 2 mm and about 6 mm, more preferably between about 2.5 mm and about 5.5 mm, for example equal to about 4.7 mm in the case in which the winding pitch is equal to about 6.3 mm, to about 3.8 mm in the case in which the winding pitch is equal to about 4.3 mm and to 3 mm in the case in which the winding pitch is equal to about 3.7 mm.

In each cross section of the hybrid reinforcing cord each of said metallic wires can be in contact with or spaced apart from at least one adjacent metallic wire.

Preferably, between at least two adjacent metallic wires there is a gap of a size such that the distance between two adjacent metallic wires, measured along the aforementioned longitudinal direction, is greater than 0 mm, more preferably greater than or equal to about 0.08 mm, even more preferably greater than or equal to about 0.10 mm.

The Applicant has indeed observed that it is preferable that the metallic wires are not in mutual contact, so as to reduce the length of the aforementioned first longitudinal segments and in this way obtaining the desired rigidity.

Preferably, the aforementioned distance between two adjacent metallic wires is lower than or equal to about 0.8 mm, more preferably lower than or equal to about 0.5 mm.

In preferred embodiments, the aforementioned distance between two adjacent metallic wires is comprised between about 0.08 mm and about 0.8 mm, preferably between about 0.10 mm and about 0.5 mm.

Preferably, the core has a first diameter and at least some of the metallic wires have a second diameter different from said first diameter.

Preferably, the second diameter is smaller than the first diameter.

The Applicant has observed that in order to increase the rigidity of the reinforcing cord without risking buckling phenomena and to achieve the desired lightness, at the same time keeping down the thickness of the belt layer, it is preferable that the ratio between the aforementioned diameters is within a predetermined range of values.

Preferably, the ratio between the first diameter and the second diameter is greater than or equal to about 1.5, more preferably greater than or equal to about 1.65.

Preferably, the ratio between the first diameter and the second diameter is lower than or equal to about 8.5, more preferably lower than or equal to about 5.7.

In preferred embodiments, the ratio between the first diameter and the second diameter is comprised between about 1.5 and about 8.5, more preferably between about 1.65 and about 5.7.

Preferably, the first diameter is greater than or equal to about 0.3 mm, more preferably greater than or equal to about 0.4 mm.

Preferably, the first diameter is lower than or equal to about 0.7 mm, more preferably lower than or equal to about 0.68 mm.

In preferred embodiments, the first diameter is comprised between about 0.3 mm and about 0.7 mm, more preferably between about 0.4 mm and about 0.68 mm.

In some preferred embodiments, the first diameter is equal to about 0.65 mm.

Preferably, the second diameter is greater than or equal to about 0.08 mm, more preferably greater than or equal to about 0.10 mm, even more preferably greater than or equal to about 0.15 mm.

Preferably, the second diameter is lower than or equal to about 0.22 mm, more preferably lower than or equal to about 0.20 mm, even more preferably lower than or equal to about 0.185 mm.

In preferred embodiments, the second diameter is comprised between about 0.08 mm and about 0.22 mm, more preferably between about 0.10 mm and about 0.20 mm, even more preferably between about 0.15 mm and about 0.185 mm.

In some preferred embodiments, the second diameter is equal to about 0.175 mm.

Preferably, the textile fibers are coated with an adhesive substance, or subjected to a chemical or physical enhanced adhesion treatment, in order to improve the adhesion with the elastomeric material in which they are embedded or with which they are coated.

In first embodiments of the tyre, all the metallic wires have the same diameter.

In alternative embodiments of the tyre, at least one first metallic wire of said plurality of metallic wires has a diameter different from the diameter of the other metallic wires of said plurality of metallic wires.

In such alternative embodiments, preferably, said at least one first metallic wire has a diameter smaller than that of the other metallic wires.

The Applicant has observed that such a provision allows an increase in the surface of the reinforcing cord exposed to the elastomeric material and, therefore, a better penetration and greater adhesion of the latter.

In this case, preferably, the ratio between the diameter of said at least one first metallic wire and the diameter of the other metallic wires is lower than about 0.95, more preferably lower than about 0.9.

Preferably, the ratio between the diameter of said at least one first metallic wire and the diameter of the other metallic wires is greater than about 0.70, more preferably greater than about 0.75.

In alternative preferred embodiments, the ratio between the diameter of said at least one first metallic wire and the diameter of the other metallic wires is comprised between about 0.1 and about 5.5, more preferably between about 0.15 and about 4.

More in particular, preferably, the diameter of said at least one first metallic wire is greater than about 0.06 mm, more preferably greater than about 0.08 mm.

Preferably, the diameter of said at least one first metallic wire is lower than about 0.32 mm, more preferably lower than about 0.30 mm.

Even more preferably, the diameter of said at least one first metallic wire is comprised between about 0.06 mm and about 0.32 mm, more preferably comprised between about 0.08 mm and about 0.30 mm.

Preferably, the diameter of the other metallic wires is greater than about 0.06 mm, more preferably greater than about 0.08 mm.

Preferably, the diameter of the other metallic wires is lower than about 0.45 mm, more preferably lower than about 0.40 mm.

Even more preferably, the diameter of the other metallic wires is comprised between about 0.06 mm and about 0.45 mm, more preferably comprised between about 0.08 mm and about 0.40 mm.

In preferred embodiments, the diameter of said at least one first metallic wire is for example equal to about 0.165 mm and the diameter of the other metallic wires is for example equal to about 0.185 mm.

Preferably, said at least one first metallic wire is arranged between two of said other metallic wires.

In all the embodiments of the tyre, preferably, at least one metallic wire of said plurality of said metallic wires is preformed (crimped) so as to extend longitudinally along a wavy or zig-zag path.

The Applicant has observed that such a provision allows an increase in the surface of the core exposed to the elastomeric material and, thus, a better penetration and greater adhesion of the latter.

Preferably, said wavy or zig-zag path comprises a plurality of deformed portions that repeat along the longitudinal direction of the metallic wire with a repetition pitch greater than about 2 mm.

Preferably, said plurality of deformed portions repeat along the longitudinal direction of the metallic wire with a repetition pitch lower than about 3 mm, preferably lower than about 2.2 mm.

In preferred embodiments, said plurality of deformed portions repeat along the longitudinal direction of the metallic wire with a repetition pitch comprised between about 2 mm and about 3 mm, preferably between about 2 mm and about 2.2 mm.

Preferably, each deformed portion of said plurality of deformed portions has a maximum width along a direction perpendicular to said longitudinal direction greater than about 0.2, more preferably greater than about 0.22.

Preferably, said maximum width along a direction perpendicular to said longitudinal direction is lower than about 0.3, more preferably lower than about 0.25.

In preferred embodiments, said maximum width is comprised between about 0.2 mm and about 0.3 mm, more preferably between about 0.22 mm and about 0.25 mm.

Preferably, each hybrid reinforcing cord has an elongation at break greater than about 2.5%, more preferably greater than about 3%.

Preferably, each hybrid reinforcing cord has an elongation at break lower than about 6%, more preferably lower than about 5.7%.

In preferred embodiments, each hybrid reinforcing cord has an elongation at break comprised between about 2.5% and about 6%, preferably between about 3% and about 5.7%.

Preferably, each hybrid reinforcing cord has a breaking load greater than about 300 N, more preferably greater than about 350 N.

Preferably, each hybrid reinforcing cord has a breaking load lower than about 800 N, more preferably lower than about 750 N.

In preferred embodiments, each hybrid reinforcing cord has a breaking load comprised between about 300 N and about 800 N, preferably between about 350 N and about 750 N.

Preferably, each belt layer comprises a number of hybrid reinforcing cords greater than about 60 cords/dm, more preferably greater than about 80 cords/dm.

Preferably, each belt layer comprises a number of hybrid reinforcing cords lower than about 130 cords/dm, more preferably lower than about 110 cords/dm.

In preferred embodiments, each belt layer comprises a number of hybrid reinforcing cords comprised between about 60 cords/dm and about 130 cords/dm, preferably between about 80 cords/dm and about 110 cords/dm, for example equal to about 90 cords/dm.

Preferably, the carcass structure comprises at least one carcass layer having opposite end edges turned around a respective annular anchoring structures to define, on opposite sides with respect to an equatorial plane of the tyre, respective bead structures.

Preferably, at least one stiffening layer can be associated with said at least one carcass layer at or close to a respective bead structure.

Preferably, said at least one stiffening layer comprises at least one fourth reinforcing cord identical to said hybrid reinforcing cord.

Said at least one stiffening layer can be arranged between a respective turned end edge of said at least one carcass layer and a respective bead structure.

More preferably, said at least one stiffening layer can at least partially surround said bead structure. Such a stiffening layer is also indicated with the term "flipper".

Alternatively or in addition thereto, said at least one stiffening layer can be associated with the respective turned end edge of said at least one carcass layer in an axially outer position with respect to the respective annular anchoring structure.

More preferably, said at least one stiffening layer can extend from said annular anchoring structure towards said tread band. Such a stiffening layer is also indicated with the term "chafer".

Preferably, in all of the embodiments and applications discussed above, the non-hybrid reinforcing cords of the zero degrees reinforcing layer comprise only wires made of textile material (for example made of aramid, nylon).

### DESCRIPTION OF EMBODIMENTS OF THE INVENTION

Further characteristics and advantages of the tyre of the present invention will become clearer from the following detailed description of preferred embodiments thereof, made with reference to the attached drawings. In such drawings:
- figure 1 is a schematic view in partial half cross section of a portion of a tyre according to an embodiment of the present invention;
- figure 2 is a schematic perspective view of a segment of a first embodiment of a reinforcing cord used at least in the belt structure of the tyre of figure 1;
- figure 3 is an enlarged schematic view of a cross section of the reinforcing cord of figure 2;
- figure 4 is an enlarged schematic view of a cross section of an alternative embodiment of a reinforcing cord used at least in the belt structure of the tyre of figure 1;
- figure 5 is a schematic view of a specific embodiment of at least one of the metallic wires used in the reinforcing cord of the previous figures.

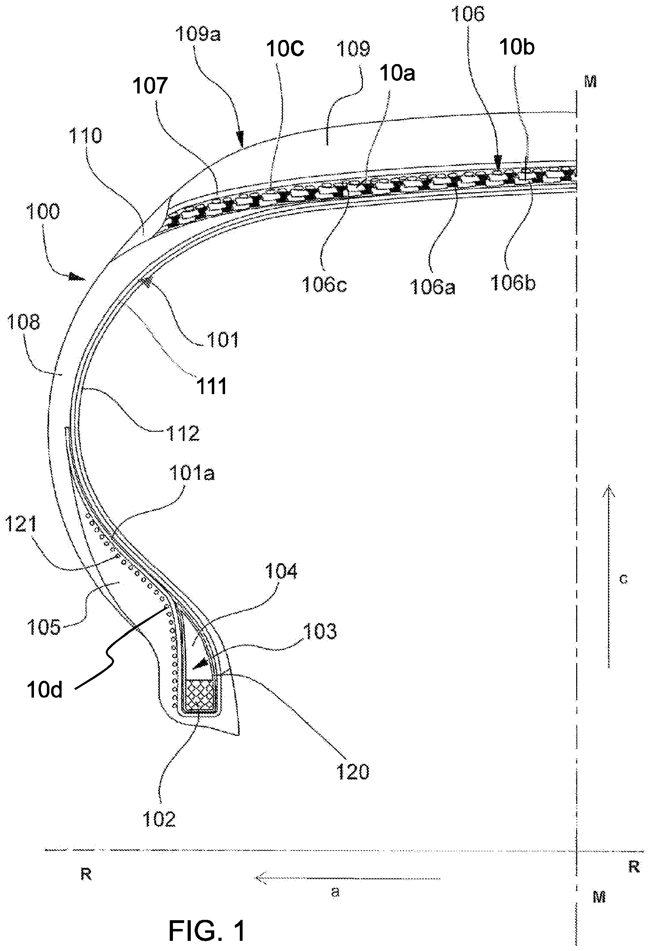

For the sake of simplicity, figure 1 shows only a part of an example embodiment of a tyre 100 in accordance with the present invention, the remaining part, which is not represented, being substantially identical and being arranged symmetrically with respect to the equatorial plane M-M of the tyre.

The tyre 100 of figure 1 is, in particular, an example embodiment of a tyre for four-wheeled vehicles.

Preferably, the tyre 100 is a HP or UHP tyre for sports and/or high-performance automobiles.

In figure 1 "a" indicates an axial direction, "c" indicates a radial direction, "M-M" indicates the equatorial plane of the tyre 100 and "R-R" indicates the rotation axis of the tyre 100.

The tyre 100 comprises at least one carcass structure 101, in turn comprising at least one carcass layer 111.

Hereinafter, for the sake of simplicity of presentation, reference will be made to an embodiment of the tyre 100 comprising a single carcass layer 111. However, what is described herein has analogous application in tyres comprising more than one carcass layer.

The carcass layer 111 has axially opposite end edges engaged with respective annular anchoring structures 102, called bead cores, possibly associated with an elastomeric filler 104. The area of the tyre comprising the bead core 102 and the possible elastomeric filler 104 forms an annular reinforcing structure 103 called "bead structure" and intended to allow the anchoring of the tyre 100 on a corresponding mounting rim, not shown.

The carcass layer 111 comprises a plurality of elongated reinforcing elements (not shown) coated with elastomeric material or incorporated in a matrix of cross-linked elastomeric material.

The carcass structure 101 is of the radial type, i.e. the elongated reinforcing elements of the carcass layer 111 are located on planes comprising the rotation axis R-R of the tyre 100 and substantially perpendicular to the equatorial plane M-M of the tyre 100. Said elongated reinforcing elements generally consist of textile cords, for example made of rayon, nylon, polyester, polyethylene naphthalate (PEN), but they can consist of metallic cords.

Each annular reinforcing structure 103 is associated with the carcass structure 101 through folding back (or turning up) the opposite end edges of the at least one carcass layer 111 around the bead core 102 and the possible elastomeric filler 104, so as to form the so-called turnings 101a of the carcass structure 101.

In an embodiment, the coupling between carcass structure 101 and annular reinforcing structure 103 can be carried out through a second carcass layer (not shown in figure 1) applied in an axially outer position with respect to the carcass layer 111.

An anti-abrasion strip 105 is arranged at each annular reinforcing structure 103 so as to surround the annular reinforcing structure 103 along the axially inner and outer and radially inner areas of the annular reinforcing structure 103, thus being arranged between the latter and the rim of the wheel when the tyre 100 is mounted on the rim. Such an anti-abrasion strip 105 can, however, not be provided.

A crossed belt structure 106 is applied in a radially outer position with respect to the carcass structure 101. The crossed belt structure 106 comprises at least two belt layers 106a, 106b arranged radially juxtaposed with respect to one another.

The belt layers 106a, 106b comprise a plurality of reinforcing cords 10a, 10b, respectively. Such reinforcing cords 10a, 10b have an orientation which is inclined with respect to the circumferential direction of the tyre 100, or to the equatorial plane M-M of the tyre 100, by an angle comprised between about 15° and about 45°, preferably between about 20° and about 40°. For example, such an angle is equal to about 30°.

The tyre 100 can also comprise a further belt layer (not shown) arranged between the carcass structure 101 and the radially innermost belt layer among the aforementioned belt layers 106a, 106b and comprising a plurality of reinforcing cords having an orientation which is inclined with respect to the circumferential direction of the tyre 100, or to the equatorial plane M-M of the tyre 100, by an angle equal to about 90°.

The tyre 100 can also comprise a further belt layer (not shown) arranged in a radially outermost position with respect to the radially outermost belt layer among the aforementioned belt layers 106a, 106b and comprising a plurality of reinforcing cords having an orientation which is inclined with respect to the circumferential direction of the tyre 100, or to the equatorial plane M-M of the tyre 100, by an angle comprised between about 20° and about 70°.

The reinforcing cords 10a, 10b of a belt layer 106a, 106b are parallel to one another and have a crossed orientation with respect to the reinforcing cords 10b, 10a of the other belt layer 106b, 106a.

At least one zero degrees reinforcing layer 106c, commonly known as "zero degrees belt", is applied in a radially outermost position with respect to the crossed belt structure 106. It comprises reinforcing cords 10c oriented in a substantially circumferential direction. Such reinforcing cords 10c thus form an angle of a few degrees (typically lower than about 10°, for example comprised between about 0° and 6°) with respect to the equatorial plane M-M of the tyre 100.

The reinforcing cords 10a, 10b, 10c are coated with an elastomeric material or incorporated in a matrix of cross linked elastomeric material.

A tread band 109 is applied in a radially outer position with respect to the zero degrees reinforcing layer 106c, like other constituent semi-worked products of the tyre 100. The tread band 109 is made of elastomeric material.

Respective sidewalls 108 made of elastomeric material are also applied on the side surfaces of the carcass structure 101, in an axially outer position with respect to the carcass structure 101 itself. Each sidewall 108 extends from one of the lateral edges of the tread band 109 up to the respective annular reinforcing structure 103.

The anti-abrasion strip 105, if provided, extends at least up to the respective sidewall 108.

In some specific embodiments, such as the one illustrated and described herein, the rigidity of the sidewall 108 can be improved by providing a stiffening layer 120, generally known as "flipper" or additional strip-shaped insert, which has the function of increasing the rigidity and integrity of the annular reinforcing structure 103 and of the sidewall 108.

The flipper 120 is wound around a respective bead core 102 and the elastomeric filler 104 so as to at least partially surround the annular reinforcing structure 103. In particular, the flipper 120 surrounds the annular reinforcing structure 103 along the axially inner and outer and radially inner areas of the annular reinforcing structure 103.

The flipper 120 is arranged between the turned end edge of the carcass layer 111 and the respective annular reinforcing structure 103. Usually, the flipper 120 is in contact with the carcass layer 111 and the annular reinforcing structure 103.

In some specific embodiments, such as the one illustrated and described herein, the bead structure 103 can also comprise a further stiffening layer 121 that is generally known by the term "chafer", or protective strip, and which has the function of increasing the rigidity and integrity of the annular reinforcing structure 103.

The chafer 121 is associated with a respective turned end edge of the carcass layer 111 in an axially outermost position with respect to the respective annular reinforcing structure 103 and extends radially towards the sidewall 108 and the tread band 109.

The flipper 120 and the chafer 121 comprise reinforcing cords 10d (those of the flipper 120 are not visible) coated with an elastomeric material or incorporated in a matrix of cross-linked elastomeric material.

The tread band 109 has, in a radially outer position thereof, a rolling surface 109a configured to come into contact with the ground. On the rolling surface 109a circumferential grooves are formed (not shown in figure 1), which are connected by transversal notches (not shown in figure 1) so as to define on the rolling surface 109a a plurality of blocks of various shapes and sizes (not shown in figure 1).

A sub-layer 107 is arranged between the crossed belt structure 106 and the tread band 109.

In some specific embodiments, such as the one illustrated and described here, a strip 110 consisting of elastomeric material, commonly known as "mini-sidewall", can possibly be provided in the connection area between the sidewalls 108 and the tread band 109. The mini-sidewall 110 is generally obtained through co-extrusion with the tread band 109 and allows an improvement of the mechanical interaction between the tread band 109 and the sidewalls 108.

Preferably, an end portion of the sidewall 108 directly covers the lateral edge of the tread band 109.

In the case of tyres without an air chamber, a rubber layer 112, generally known as "liner", can also be provided in a radially inner position with respect to the carcass layer 111 to provide the necessary impermeability to the inflation air of the tyre 100.

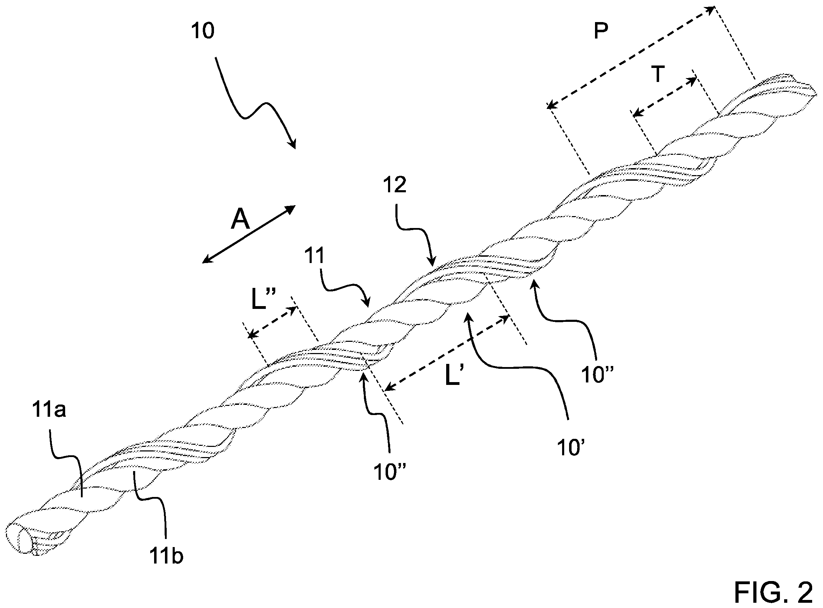

At least some of the reinforcing cords 10a (preferably all of the reinforcing cords 10a provided in the belt layer 106a) and at least some of the reinforcing cords 10b (preferably all of the reinforcing cords 10b provided in the belt layer 106b) are hybrid reinforcing cords 10 of the type illustrated in figures 2-4 and described below.

The reinforcing cords 10c, on the other hand, are non-hybrid reinforcing cords, typically made of textile material, typically aramid or nylon.

With reference to figures 2-4, each hybrid reinforcing cord 10 comprises a core 11 extending along a longitudinal direction A and a plurality of wires 12 substantially parallel to one another and helically wound around the core 11 with a predetermined winding pitch P.

The core 11 is made of a non-metallic material, whereas the wires 12 are made of a metallic material.

In the example embodiments illustrated in figures 2-4, there are three metallic wires 12.

Figures 2-3 show a first preferred embodiment of the hybrid reinforcing cord 10, in which all the three metallic wires 12 have the same diameter d.

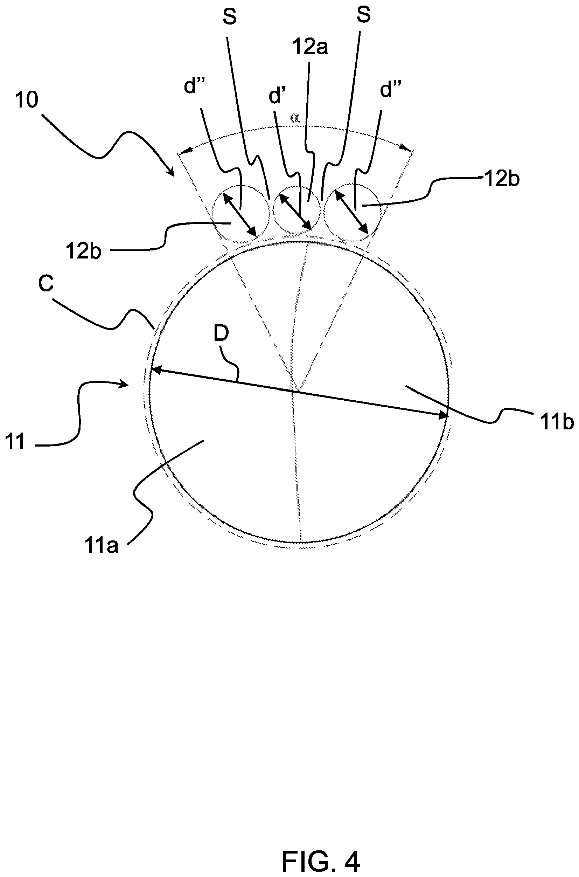

Figure 4, on the other hand, shows a second preferred embodiment of the hybrid reinforcing cord 10, which differs from that of figures 2-3 only in that the three metallic wires 12 have different diameters. In particular, an embodiment is shown in which a metallic wire 12' having a diameter d' is arranged between two metallic wires 12" having a diameter d" greater than d'.

In all the embodiments of the hybrid reinforcing cord 10, preferably, the winding pitch P of the metallic wires 12 is comprised between about 2 mm and about 6.3 mm, more preferably between about 2.5 mm and about 6 mm, even more preferably between about 3.5 mm and about 4.5 mm, for example equal to about 4.3 mm or to about 3.7 mm.

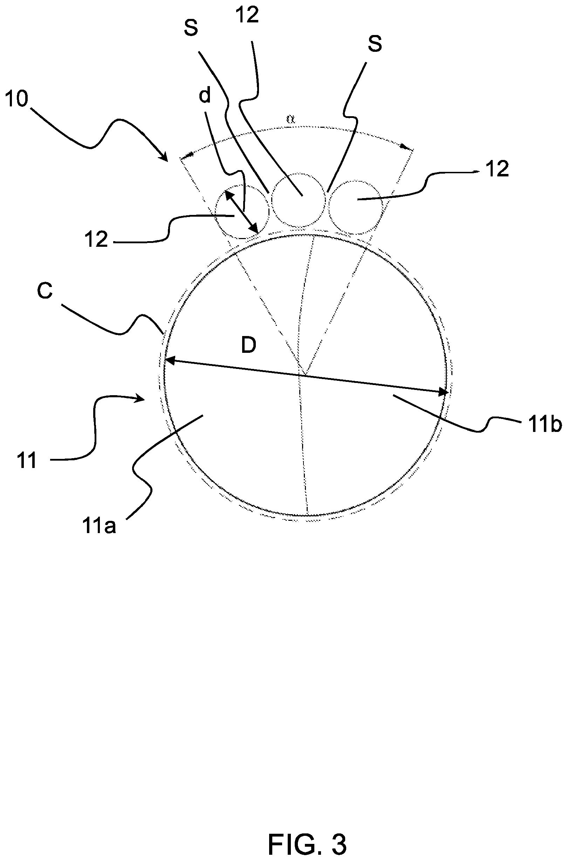

The arrangement of the metallic wires 12 around the core 11 is such that the metallic wires 12 do not completely surround the core 12. In particular, the metallic wires 12 are arranged around the core 11 so that, in any cross section of the hybrid reinforcing cord 10, they are located at only one angular portion of an ideal circumference (indicated in figure 3 with C and with a broken line) which circumscribes the core 11. Such an angular portion is defined by an angle α which is lower than 90°, preferably comprised between about 30° and about 75°, more preferably between about 40° and about 65°, for example equal to about 45°.

The hybrid reinforcing cord 10 comprises a surface portion (such as for example that one which is in foreground in figure 2) extending along the longitudinal direction A and comprising first longitudinal segments 10', wherein no metallic wires 12 are provided, arranged between two respective second longitudinal segments 10" comprising the metallic wires 12.

Preferably, each of the first longitudinal segments 10' has a length L', measured along the aforementioned predetermined longitudinal direction A, comprised between 2 mm and about 6 mm, more preferably between about 2.5 mm and about 5.5 mm, for example equal to about 3.7 mm.

Preferably, the length L' of each of the first longitudinal segments 10' is greater than the length L" of each of the second longitudinal segments 10".

In the example illustrated herein, the core 11 is defined by two thread-like elements (or yarns) 11a, 11b made of a textile material having a high modulus (i.e. with an initial modulus greater than 2000 cN/Tex).

Preferably, each elongated element 11a, 11b has a linear density comprised between about 800 dTex and about 4400 dTex, more preferably between about 1100 dTex and about 3800 dTex, even more preferably between about 1600 dTex and about 3200 dTex.

In preferred embodiments, each of the two elongated elements 11a, 11b comprises a plurality of aramid or lyocell or glass fibers or assemblies of fibers comprising at least 30% of aramid, lyocell or glass fibers and not more than 70% of nylon, rayon or polyethylene terephthalate fibers (PET).

Each elongated element 11a, 11b can for example be made of aramid with linear density equal to about 1110 dTex and an initial tangent modulus equal to about 6500 cN/Tex.

In alternative examples, each elongated element 11a, 11b can for example be made with 50% of aramid with linear density equal to about 1100 dTex and 50% of PET with linear density equal to about 1100 dTex. Such an elongated element 11a, 11b, herein called "Commingled 2200 dTex", has an initial tangent modulus equal to about 3300 CN/Tex.

In further alternative examples, each elongated element 11a, 11b can for example be made with 43% of aramid with linear density equal to about 840 dTex and 57% of PET with linear density equal to about 1100 dTex. Such an elongated element 11a, 11b, herein called "Commingled 1940 dTex", has an initial tangent modulus equal to about 2800 CN/Tex.

In further alternative examples, each elongated element 11a, 11b can for example be made with 33% of aramid with linear density equal to about 550 dTex and 67% of PET with linear density equal to about 1100 dTex. Such an elongated element 11a, 11b, herein called "Commingled 1650 dTex, has an initial tangent modulus equal to about 2500 CN/Tex.

The two elongated elements 11a and 11b are twisted together (i.e. twisted on one another) with a predetermined twisting pitch T smaller than the winding pitch P.

The twisting direction of the two elongated elements 11a and 11b is preferably the same as the winding direction of the metallic wires 12, but it is possible to provide for opposite directions.

Each elongated element 11a, 11b can be twisted on itself, in the same direction, or in the opposite direction, to the direction with which it is twisted on the other elongated element 11b, 11a.

Alternatively, the core 11 can be defined by a single elongated element twisted on itself with a predetermined twisting pitch smaller than the winding pitch P, or by more than two elongated elements twisted together with a predetermined twisting pitch, or by a single non-twisted elongated element.

The number of twists of the single elongated element twisted on itself or of the two elongated elements 11a, 11b twisted together is preferably comprised between about 100 tmp and about 500 tpm, more preferably between about 200 tpm and about 400 tpm, for example equal to about 300 tpm.

Irrespective of the specific type of material used to make the core 11, such a material is made suitably adhesive on the surface so as to offer adequate adhesion to the surrounding compound. Typically, the enhanced adhesion can be obtained by coating with an adhesive substance or through a chemical or physical treatment.

For example, the enhanced adhesion is obtained through immersion of each of the elongated elements 11a, 11b, or of the core 11 after having twisted together the two elongated elements 11a, 11b, in a solution comprising the adhesive substance.

The core 11 has a diameter D greater than the diameter of the metallic wires 12.

Preferably, the diameter D is comprised between about 0.3 mm and about 0.7 mm, more preferably between about 0.4 mm and about 0.68 mm, for example equal to about 0.65 mm.

The metallic wires 12 can be in a condition of mutual contact. However, as shown in figures 3 and 4, it is preferable that the metallic wires 12 are spaced apart from one another by a gap S having a length (corresponding to the width measured along the aforementioned longitudinal direction A) comprised between about 0.08 mm and about 0.8 mm, more preferably between about 0.10 mm and about 0.5 mm, for example equal to about 0.7 mm.

All the metallic wires 12 are preferably made of the same metallic material.

In a preferred embodiment of the present invention, such a material is steel, more preferably NT (Normal Tensile), HT (High Tensile), SHT (Super High Tensile), UHT (Ultra High Tensile) MT (Mega Tensile) steel.

In the embodiment of figures 2-3, the metallic wires 12 have a diameter d preferably comprised between about 0.08 mm and about 0.22 mm, more preferably between about 0.10 mm and about 0.20 mm, even more preferably between about 0.15 mm and about 0.185 mm, for example equal to 0.175 mm.

It is preferable that the ratio between the diameter D of the core 11 and the diameter d of the metallic wires 12 is comprised between about 1.5 and about 8.5, more preferably between about 1.65 and about 5.7, for example equal to about 3.7.

The total diameter of the hybrid reinforcing cord 10 of the embodiment of figures 2 and 3 is thus equal to the sum of the diameter D of the core 11 and the diameter d of the metallic wires d.

Preferably, the diameter D of the core 11, the diameter d of the metallic wires 12 and the winding pitch P of the metallic wires 12 are selected so that the metallic wires 12 are inclined with respect to the longitudinal direction A of the core 11 by an angle comprised between 10° and 40°, more preferably between 15° and 30°, for example equal to about 18°.

In the embodiment of figure 4, a metallic wire 12a has a diameter d' that, preferably, is comprised between about 0.06 mm and about 0.32 mm, more preferably between about 0.08 mm and about 0.30 mm, for example equal to 0.165 mm, whereas the two metallic wires 12b arranged on opposite sides with respect to the metallic wire 12a have a diameter d" that, preferably, is comprised between about 0.06 mm and about 0.45 mm, more preferably between about 0.08 mm and about 0.40 mm, for example equal to 0.185 mm.

It is preferable that the ratio between the diameter d' of the metallic wire 12a and the diameter d" of the metallic wires 12b is comprised between about 0.1 and about 5.5, more preferably between about 0.15 and about 4, for example equal to about 0.89.

The total diameter of the hybrid reinforcing cord 10 of the embodiment of figure 4 is thus equal to the sum of the diameter D of the core 11 and of the diameter d" of the metallic wires 12b.

Preferably, the diameter D of the core 11, the diameter d' of the metallic wire 12a, the diameter d" of the metallic wires 12b and the winding pitch P of the metallic wires 12a, 12b are selected so that the metallic wires 12a, 12b are inclined with respect to the longitudinal direction A of the core 11 by an angle comprised between 10° and 40°, more preferably between 15° and 30°, for example equal to about 18°.

In all the embodiments described above, at least one of the metallic wires 12, 12a, 12b (preferably all the metallic wires 12 in the embodiment of figures 2-3 and at least the metallic wire 12a in the embodiment of figure 4, more preferably both the metallic wire 12a and the metallic wires 12b) can be preformed (crimped) so as to extend longitudinally along a wavy or zig-zag path.

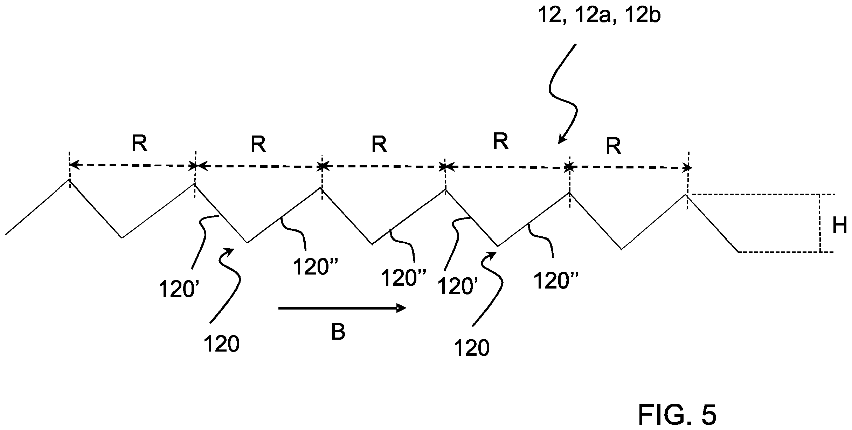

Figure 5 very schematically shows a metallic wire 12, 12a, 12b preformed (crimped) so as to extend longitudinally along a zig-zag path. It includes a plurality of deformed portions 120 that follow one after the other along the longitudinal direction of the metallic wire 12, 12a, 12b with a repetition pitch R preferably comprised between about 2 mm and about 3 mm, more preferably between about 2 mm and about 2.2 mm.

The aforementioned deformed portions 120 are each defined by two segments 120', 120" that are substantially rectilinear and inclined on opposite sides (preferably with substantially equal angle) with respect to the longitudinal direction B of the metallic wire 12, 12a, 12b.

Each deformed portion 120 has a maximum width H along a direction perpendicular to the longitudinal direction B of the metallic wire 12, 12a, 12b comprised between about 0.2 mm and about 0.3 mm, more preferably between about 0.22 mm and about 0.25 mm.

Preferably, each belt layer 106a, 106b comprises a number of hybrid reinforcing cords 10 comprised between about 60 cords/dm and about 130 cords/dm, preferably comprised between about 80 cords/dm and about 110 cords/dm, for example equal to about 90 cords/dm.

Preferably, each hybrid reinforcing cord 10 has an elongation at break comprised between about 2.5% and about 6%, preferably between about 3% and about 5.7%, and a breaking load comprised between about 300 N and about 800 N, preferably between about 350 N and about 750 N.

In the preferred embodiments of the invention, the hybrid reinforcing cord 10 described above is used in both of the belt layers 106a, 106b. However, there are alternative embodiments in which the hybrid reinforcing cord 10 described above is used in only one of the belt layers 106a, 106b, the other belt layer in this case comprising metallic reinforcing cords.

At least some of the reinforcing cords 10d (preferably all of the reinforcing cords 10d) can also be hybrid reinforcing cords 10 of the type described above.

In specific embodiments, only the reinforcing cords 10a, and not also the reinforcing cords 10b, or vice-versa, are hybrid reinforcing cords 10 of the type described above.

In some embodiments, only the reinforcing cords 10a and/or 10b, and not also the reinforcing cords 10d, are hybrid reinforcing cords 10 of the type described above.

In other embodiments, only the reinforcing cords 10d, and not also the reinforcing cords 10a and/or 10b, are hybrid reinforcing cords 10 of the type described above.

When the reinforcing cords 10d are hybrid reinforcing cords 10 of the type described above, such hybrid reinforcing cords 10 can be used only in the flipper 120 (if provided and when the chafer is not provided or is provided and comprises non-hybrid reinforcing cords), only in the chafer 121 (if provided and when the flipper is not provided or is provided and comprises non-hybrid reinforcing cords), or both in the flipper 120 and in the chafer 121 (if both are provided).

The Applicant has made some samples of hybrid reinforcing cords 10 used in the tyre 100 of the present invention. Such samples are listed in Table 1 below and are indicated as 1) - 8). In such a table, for each sample the breaking load, the elongation at break and the diameter of the hybrid reinforcing cord 10 are indicated.

**TABLE 1**

| | **BREAKING LOAD OF THE CORD (N)** | **ELONGATION AT BREAK OF THE CORD (%)** | **DIAMETER OF THE CORD (mm)** | **WINDING PITCH (mm)** | **DIAMETER OF THE CORE (mm)** |
|---|---|---|---|---|---|
| 1) Ar1672+3×0.175 | 701 | 5.60 | 0.830 | 6.3 | 0.65 |
| | | | | | |
| 2) Ar1672+(0,175+2×0.14) | 618 | 5.53 | 0.817 | 6.3 | 0.65 |
| | | | | | |
| 3) Ar1672+(0,175+2×0.175) | 650 | 5.12 | 0.848 | 6.3 | 0.65 |
| | | | | | |
| 4) Ar1672+(0,175+2×0.175) | 702 | 5.50 | 0.845 | 6.3 | 0.65 |
| | | | | | |
| 5) Ar1672+(0,14+2×0.175) | 650 | 5.29 | 0.820 | 6.3 | 0.65 |
| | | | | | |
| 6) Ar1671+3×0.175 | 357 | 3.07 | 0.710 | 4.3 | 0.33 |
| | | | | | |
| 7) Ar1102+3×0.175 | 552 | 4.4 | 0.673 | 3.7 | 0.51 |
| | | | | | |
| 8) Ar1671+3×0.175 | 354 | 3.26 | 0.715 | 3.7 | 0.33 |

The sample 1) is made in accordance with the embodiment of figures 2 and 3. It has a core 11 made of aramid with linear density equal to 1672 cN/Tex and diameter D equal to 0.65 mm and three metallic wires 12 of diameter d equal to 0.175 mm wound around the core 11 with a left-handed winding pitch P equal to 6.3 mm.

The sample 2) is made in accordance with the embodiment of figure 4. It has a core 11 made of aramid with linear density equal to 1672 cN/Tex and diameter D equal to 0.65 mm, a metallic wire 12a of diameter d' equal to 0.175 mm and two metallic wires 12b of diameter d" equal to 0.14 mm. The metallic wires 12a and 12b are wound around the core 11 with a left-handed winding pitch P equal to 6.3 mm.

The samples 3) and 4) are made in accordance with the embodiment of figures 2 and 3. They have a core 11 made of aramid with linear density equal to 1672 cN/Tex and diameter D equal to 0.65 mm and three metallic wires 12 of diameter d equal to 0.175 mm wound around the core 11 with a left-handed winding pitch P equal to 6.3 mm. The difference between the samples 3) and 4) is that in sample 3) one of the three metallic wires 12 (the central one) is deformed so as to have a slightly sinusoidal progression, whereas in sample 4) such a deformation is not imparted. In both samples 3) and 4), the other two metallic wires 12 are preformed (crimped) in accordance with the above discussion in the present description. The metallic wires 12 are wound around the core 11 with a left-handed winding pitch equal to 6.3 mm.

The sample 5) is made in accordance with an alternative embodiment to that of figure 4. It has a core 11 made of aramid with linear density equal to 1672 cN/Tex and diameter D equal to 0.65 mm, a metallic wire 12a of diameter d' equal to 0.14 mm and two metallic wires 12b of diameter d" equal to 0.175 mm. The metallic wires 12a and 12b are made of HT steel and are wound around the core 11 with a left-handed winding pitch P equal to 6.3 mm.

The sample 6) is made in accordance with the embodiment of figures 2 and 3. It has a core 11 made of aramid with linear density equal to 1671 cN/Tex and diameter D equal to 0.33 mm and three metallic wires 12 of diameter d equal to 0.175 mm wound around the core 11 with a left-handed winding pitch P equal to 4.3 mm.

The sample 7) is made in accordance with the embodiment of figures 2 and 3. It has a core 11 made of aramid with linear density equal to 1102 cN/Tex and diameter D equal to 0.51 mm and three metallic wires 12 of diameter d equal to 0.175 mm wound around the core 11 with a left-handed winding pitch P equal to 3.7 mm.

The sample 8) is made in accordance with the embodiment of figures 2 and 3. It has a core 11 made of aramid with linear density equal to 1671 cN/Tex and diameter D equal to 0.33 mm and three metallic wires 12 of diameter d equal to 0.175 mm wound around the core 11 with a left-handed winding pitch P equal to 3.7 mm.

The Applicant has also made the following variants of the aforementioned samples 1), 6), 7) and 8), i.e. of some of the sample made according to the embodiment of figures 2-3. Such variants are listed in Table 2 below.

**TABLE 2**

| | **Diameter of metallic wires (mm)** | **Diameter of core (mm)** | **Winding pitch (mm)** |
|---|---|---|---|
| Ar1671+ 3×0.175 | 0.175 | 0.33 | 6.3 |
| Ar1672+ 4×0.175 | 0.175 | 0.65 | 6.3 |
| Ar1102+3×0.175 | 0.175 | 0.51 | 6.3 |
| Ar1102+ 4×0.175 | 0.175 | 0.51 | 6.3 |
| Ar1102+3×0.185 | 0.185 | 0.51 | 6.3 |
| Ar1102+ 3×0.20 | 0.2 | 0.51 | 6.3 |
| Ar1102+ 4×0.20 | 0.2 | 0.51 | 6.3 |
| Ar1102+ 3×0.15 | 0.15 | 0.51 | 6.3 |
| Ar1102+ 4×0.15 | 0.15 | 0.51 | 6.3 |
| Ar1102+3×0.175 | 0.175 | 0.51 | 4.3 |
| Ar842 + 3×0.175 | 0.175 | 0.44 | 6.3 |
| Ar842 + 3x0.175 | 0.175 | 0.44 | 3.7 |

The variant indicated in the first line of Table 1 differs from the sample 1) only in that the diameter D of the core 11 is equal to 0.33 mm.

The variant indicated in the second line of Table 2 differs from the sample 1) only in that it has four metallic wires 12.

The variant indicated in the third line of Table 2 differs from the sample 7) only in that the winding pitch P is equal to 6.3 mm.

The variant indicated in the fourth line of Table 2 differs from the variant indicated in the third line of Table 2 only in that it has four metallic wires 12.

The variant indicated in the fifth line of Table 2 differs from the variant indicated in the third line of Table 2 only in that the diameter of the metallic wires 12 is equal to 0.185 mm

The variant indicated in the sixth line of Table 2 differs from the variant indicated in the third line of Table 2 only in that the diameter of the metallic wires 12 is equal to 0.2 mm.

The variant indicated in the seventh line of Table 2 differs from the variant indicated in the sixth line of Table 2 only in that it has metallic wires 12.

The variant indicated in the eighth line of Table 2 differs from the variant indicated in the third line of Table 2 only in that the diameter of the metallic wires 12 is equal to 0.15 mm.

The variant indicated in the ninth line of Table 2 differs from the variant indicated in the eighth line of Table 2 only in that it has four metallic wires 12.

The variant indicated in the tenth line of Table 2 differs from sample 7) only in that the winding pitch P is equal to 4.3 mm.

The variant indicated in the eleventh line of Table 2 differs from the variant indicated in the eighth line of Table 2 only in that the linear density of the aramid fibers of the core 11 is equal to 842 Cn/Tex and in that the diameter D of the core 11 is equal to 0.44 mm.

The variant indicated in the twelfth line of Table 2 differs from the variant indicated in the eleventh line of Table 2 only in that the winding pitch P is equal to 3.7 mm.

The present invention has been described with reference to some preferred embodiments. Many modifications can be brought to the embodiments described above, still remaining within the scope of protection of the invention, which is defined by the following claims.

## Claims

1. Tyre (100) for vehicle wheels, comprising:
- a carcass structure (101);
- a crossed belt structure (106) arranged in a radially outer position with respect to the carcass structure (101) and comprising a first belt layer (106a) and at least one second belt layer (106b) arranged in a radially outer position with respect to the first belt layer (106a);
- a tread band (10)
wherein at least one of said first belt layer (106a) and second belt layer (106b) comprises a plurality of hybrid reinforcing cords (10) each having a core (11) made of textile material having an initial tangent modulus equal to or greater than 2000 cN/Tex and extending along a predetermined longitudinal direction (A) and a plurality of metallic wires (12) substantially parallel to one another and helically wound around the core (11) with a predetermined winding pitch (P), wherein the metallic wires (12) are arranged around the core (11) so that, in any cross section of the hybrid reinforcing cord (10), they are located at only one angular portion of an ideal circumference (C) that circumscribes the core (11), wherein said angular portion is defined by an angle, which is less than 90 °,
**characterised in that**
the tyre further comprises at least one zero degrees reinforcing layer (106c) arranged in a radially outer position with respect to the crossed belt structure (106), said tread band (10) being arranged in a radially outer position with respect to said at least one zero degrees reinforcing layer (106c), wherein said at least one zero degrees reinforcing layer (106c) includes a plurality of non hybrid reinforcing cords (10c) and wherein the number of the metallic wires (12) is comprised between 3 and 5.

2. Tyre (100) according to claim 1, wherein said core (11) comprises textile fibers selected in the group comprising aramid, lyocell or glass fibers or assemblies of fibers comprising at least 30% of aramid, lyocell or glass fibers and not more than 70% of nylon, rayon or polyethylene terephthalate fibers.

3. Tyre (100) according to claim 2, wherein said textile fibers are mutually joined to one another to define a single elongated element twisted on itself with a predetermined twisting pitch or a plurality of elongated elements (11a, 11b) twisted together with a predetermined twisting pitch (T).

4. Tyre (100) according to claim 3, wherein the twisting pitch (T) is lower than the winding pitch (P).

5. Tyre (100) according to any one of the previous claims, wherein the winding pitch (P) is lower than 6 mm.

6. Tyre (100) according to any one of the previous claims, wherein each hybrid reinforcing cord (10) comprises, at a surface portion thereof extending along said predetermined longitudinal direction (A), first longitudinal segments (10') lacking said metallic wires (12) and second longitudinal segments (10") comprising said metallic wires (12), each of the first longitudinal segments (10') being arranged between two respective second longitudinal segments (10") and having a length (L') along said predetermined longitudinal direction (A) lower than or equal to 6 mm.

7. Tyre (100) according to any one of the previous claims, wherein in each cross section of the hybrid reinforcing cord (10) each of the metallic wires (12) is spaced apart from at least one adjacent metallic wire (12) by a gap (S) having a size such that the distance between two adjacent metallic wires (12), measured along said longitudinal direction (A), is greater than 0 mm, preferably greater than, or equal to, 0.08 mm.

8. Tyre (100) according to any one of the previous claims, wherein the core (11) has a first diameter (D) and at least some of the metallic wires (12) have a second diameter (d), and wherein the ratio between the first diameter (D) and the second diameter (d) is comprised between 1.5 and 4.6.

9. Tyre (100) according to any one of the previous claims, wherein all the metallic wires (12) have the same diameter (d).

10. Tyre (100) according to any one of claims 1 to 8, wherein at least one first metallic wire (12a) of said plurality of metallic wires (12) has a diameter (d') smaller than the diameter (d") of the other metallic wires (12b) of said plurality of metallic wires (12).

11. Tyre (100) according to claim 10, wherein said at least one first metallic wire (12a) is arranged between two of said other metallic wires (12b).

12. Tyre (100) according to any one of the previous claims, wherein at least one metallic wire of said plurality of said metallic wires (12) is preformed so as to extend longitudinally along a wavy or zig-zag path.

13. Tyre (100) according to any one of the previous claims, wherein the carcass structure (101) comprises at least one carcass layer (111) having opposite end edges turned around respective annular anchoring structures (102) to define, on opposite sides with respect to an equatorial plane (X) of the tyre (100), respective bead structures (103), wherein each bead structure (103) comprises at least one stiffening layer (120, 121) associated with said at least one carcass layer (111) at or close to a respective turned end edge and including a plurality of reinforcing cords identical to said hybrid reinforcing cords (10).

## Patentansprüche

1. Reifen (100) für Fahrzeugräder umfassend:
- eine Karkassenstruktur (101);
- eine diagonale Gürtelstruktur (106), die in einer radial äußeren Position in Bezug auf die Karkassenstruktur (101) angeordnet ist und eine erste Gürtellage (106a) und zumindest eine zweite Gürtellage (106b), die in einer radial äußeren Position in Bezug auf die erste Gürtellage (106a) angeordnet ist, umfasst;
- einen Laufflächenring (10);
wobei zumindest eine von der ersten Gürtellage (106a) und der zweiten Gürtellage (106b) eine Vielzahl von hybriden Verstärkungskorden (10) aufweist, die jeweils einen Kern (11) aus textilem Material mit einem anfänglichen Tangentenmodul gleich oder größer als 2000 cN/Tex aufweist und sich entlang einer vorbestimmten Längsrichtung (A) erstreckt, und eine Vielzahl von metallischen Drähten (12), die im Wesentlichen parallel zueinander sind und mit einem vorbestimmten Wicklungsabstand (P) spiralförmig um den Kern (11) gewickelt sind, wobei die metallischen Drähte (12) um den Kern (11) herum so angeordnet sind, dass sie sich in einem beliebigen Querschnitt des hybriden Verstärkungskords (10) nur an einem Winkelabschnitt eines idealen Umfangs (C) befinden, der den Kern (11) umschreibt, wobei der Winkelabschnitt durch einen Winkel definiert ist, der kleiner als 90° ist,
**dadurch gekennzeichnet, dass**
der Reifen ferner zumindest eine Null-Grad-Verstärkungslage (106c) umfasst, die in einer radial äußeren Position in Bezug auf die diagonale Gürtelstruktur (106) angeordnet ist, wobei der Laufflächenring (10) in einer radial äußeren Position in Bezug auf die zumindest eine Null-Grad-Verstärkungslage (106c) angeordnet ist, wobei die zumindest eine Null-Grad-Verstärkungslage (106c) eine Vielzahl von nicht hybriden Verstärkungskorden (10c) beinhaltet und wobei die Anzahl der metallischen Drähte (12) zwischen 3 und 5 beträgt.

2. Reifen (100) nach Anspruch 1, wobei der Kern (11) Textilfasern umfasst, die aus der Gruppe ausgewählt sind, die Aramid-, Lyocell- oder Glasfasern oder Faserbündel umfassend zumindest 30 % Aramid-, Lyocell- oder Glasfasern und nicht mehr als als 70 % Nylon-, Rayon- oder Polyethylenterephthalat-Fasern umfasst.

3. Reifen (100) nach Anspruch 2, wobei die Textilfasern untereinander verbunden sind, um ein einzelnes längliches Element, das in sich selbst mit einem vorbestimmten Verdrillungsabstand verdrillt ist, oder eine Vielzahl von länglichen Elemente (11a, 11b) zu bilden, die miteinander mit einem vorbestimmten Verdrillungsabstand (T) verdrillt sind.

4. Reifen (100) nach Anspruch 3, wobei der Verdrillungsabstand (T) geringer ist als der Wicklungsabstand (P) .

5. Reifen (100) nach einem der vorhergehenden Ansprüche, wobei der Wicklungsabstand (P) weniger als 6 mm beträgt.

6. Reifen (100) nach einem der vorhergehenden Ansprüche, wobei jeder hybride Verstärkungskord (10) an einem Oberflächenabschnitt davon, der sich entlang der vorbestimmten Längsrichtung (A) erstreckt, erste längliche Segmente (10'), die keine metallischen Drähte (12) aufweisen, und zweite längliche Segmente (10") umfassen, welche die metallischen Drähte (12) umfassen, wobei jedes der ersten länglichen Segmente (10') zwischen zwei jeweiligen zweiten länglichen Segmenten (10") angeordnet ist und eine Länge (L') entlang der vorbestimmten Längsrichtung (A) von weniger als oder gleich 6 mm aufweist.

7. Reifen (100) nach einem der vorhergehenden Ansprüche, wobei in jedem Querschnitt des hybriden Verstärkungskords (10) jeder der metallischen Drähte (12) von zumindest einem benachbarten metallischen Draht (12) durch einen Spalt (S) beabstandet ist, der eine solche Größe aufweist, dass der Abstand zwischen zwei benachbarten metallischen Drähten (12) gemessen entlang der Längsrichtung (A) größer als 0 mm, vorzugsweise größer als oder gleich 0,08 mm ist.

8. Reifen (100) nach einem der vorhergehenden Ansprüche, wobei der Kern (11) einen ersten Durchmesser (D) aufweist und zumindest einige der metallischen Drähte (12) einen zweiten Durchmesser (d) aufweisen, und wobei das Verhältnis zwischen dem ersten Durchmesser (D) und dem zweiten Durchmesser (d) zwischen 1,5 und 4,6 beträgt.

9. Reifen (100) nach einem der vorhergehenden Ansprüche, wobei alle metallischen Drähte (12) denselben Durchmesser (d) aufweisen.

10. Reifen (100) nach einem der Ansprüche 1 bis 8, wobei zumindest ein erster metallischer Draht (12a) der Vielzahl von metallischen Drähten (12) einen Durchmesser (d') aufweist, der kleiner als der Durchmesser (d") der anderen metallischen Drähte (12b) der Vielzahl von metallischen Drähten (12) ist.

11. Reifen (100) nach Anspruch 10, wobei der zumindest eine erste Metalldraht (12a) zwischen zwei der anderen metallischen Drähte (12b) angeordnet ist.

12. Reifen (100) nach einem der vorhergehenden Ansprüche, wobei zumindest ein metallischer Draht der Vielzahl von metallischen Drähten (12) so vorgeformt ist, dass er sich der Länge nach entlang eines gewellten oder zickzackförmigen Pfads erstreckt.

13. Reifen (100) nach einem der vorhergehenden Ansprüche, wobei die Karkassenstruktur (101) zumindest eine Karkassenlage (111) umfasst, die gegenüberliegende Endränder aufweist, die um jeweilige ringförmige Verankerungsstrukturen (102) herumgeschalgen sind, um auf gegenüberliegenden Seiten in Bezug auf eine Äquatorialebene (X) des Reifens (100) jeweilige Wulststrukturen (103) zu definieren, wobei jede Wulststruktur (103) zumindest eine Versteifungslage (120, 121) umfasst, die der zumindest einen Karkassenlage (111) an dem oder nahe an dem jeweiligen umgeschlagenen Endrand zugeordnet ist und eine Vielzahl von Verstärkungskorden beinhaltet, die identisch zu den hybriden Verstärkungskorden (10) sind.

## Revendications

1. Pneu (100) pour roues de véhicule, comprenant :
- une structure de carcasse (101) ;
- une structure de ceinture croisée (106) agencée dans une position radialement externe par rapport à la structure de carcasse (101) et comprenant une première couche de ceinture (106a) et au moins une deuxième couche de ceinture (106b) agencée dans une position radialement externe par rapport à la première couche de ceinture (106a) ;
- une bande de roulement (10)
dans lequel au moins l'une desdites première couche de ceinture (106a) et deuxième couche de ceinture (106b) comprend une pluralité de câblés de renfort hybrides (10) ayant chacune une âme (11) réalisée en matériau textile ayant un module tangent initial supérieur ou égal à 2000 cN/Tex et s'étendant le long d'une direction longitudinale prédéterminée (A) et une pluralité de fils métalliques (12) sensiblement parallèles les uns aux autres et enroulés en hélice autour de l'âme (11) avec un pas d'enroulement prédéterminé (P), où les fils métalliques (12) sont agencés autour de l'âme (11) de sorte que, dans n'importe quelle section transversale du câblé de renfort hybride (10), ils soient situés au niveau d'une seule partie angulaire d'une circonférence idéale (C) qui circonscrit l'âme (11), où ladite partie angulaire est définie par un angle qui est inférieur à 90°,
**caractérisé en ce que**
le pneu comprend en outre au moins une couche de renfort de zéro degré (106c) agencée dans une position radialement externe par rapport à la structure de ceinture croisée (106), ladite bande de roulement (10) étant agencée dans une position radialement externe par rapport à ladite au moins une couche de renfort de zéro degré (106c), où ladite au moins une couche de renfort de zéro degré (106c) comporte une pluralité de câblés de renfort non hybrides (10c) et où le nombre des fils métalliques (12) est compris entre 3 et 5.

2. Pneu (100) selon la revendication 1, dans lequel ladite âme (11) comprend des fibres textiles choisies dans le groupe comprenant des fibres aramide, lyocell ou de verre ou des ensembles de fibres comprenant au moins 30% de fibres aramide, lyocell ou de verre et pas plus de 70% de fibres de nylon, de rayonne ou de polyéthylène téréphtalate.

3. Pneu (100) selon la revendication 2, dans lequel lesdites fibres textiles sont reliées mutuellement les unes aux autres pour définir un seul élément allongé torsadé sur lui-même avec un pas de torsion prédéterminé ou une pluralité d'éléments allongés (11a, 11b) torsadés ensemble avec un pas de torsion prédéterminé (T).

4. Pneu (100) selon la revendication 3, dans lequel le pas de torsion (T) est inférieur au pas d'enroulement (P).

5. Pneu (100) selon l'une quelconque des revendications précédentes, dans lequel le pas d'enroulement (P) est inférieur à 6 mm.

6. Pneu (100) selon l'une quelconque des revendications précédentes, dans lequel chaque câblé de renfort hybride (10) comprend, au niveau d'une partie de surface de celui-ci s'étendant le long de ladite direction longitudinale prédéterminée (A), des premiers segments longitudinaux (10') dépourvus desdits fils métalliques (12) et des deuxièmes segments longitudinaux (10") comprenant lesdits fils métalliques (12), chacun des premiers segments longitudinaux (10') étant agencé entre deux deuxièmes segments longitudinaux respectifs (10") et ayant une longueur (L') le long de ladite direction longitudinale prédéterminée (A) inférieure ou égale à 6 mm.

7. Pneu (100) selon l'une quelconque des revendications précédentes, dans lequel dans chaque section transversale du câblé de renfort hybride (10) chacun des fils métalliques (12) est espacé d'au moins un fil métallique adjacent (12) par un espace (S) ayant une taille telle que la distance entre deux fils métalliques adjacents (12), mesurée le long de ladite direction longitudinale (A), soit supérieure à 0 mm, de préférence supérieure à, ou égale à, 0,08 mm.

8. Pneu (100) selon l'une quelconque des revendications précédentes, dans lequel l'âme (11) a un premier diamètre (D) et au moins certains des fils métalliques (12) ont un deuxième diamètre (d), et dans lequel le rapport entre le premier diamètre (D) et le deuxième diamètre (d) est compris entre 1,5 et 4,6.

9. Pneu (100) selon l'une quelconque des revendications précédentes, dans lequel tous les fils métalliques (12) ont le même diamètre (d).

10. Pneu (100) selon l'une quelconque des revendications 1 à 8, dans lequel au moins un premier fil métallique (12a) de ladite pluralité de fils métalliques (12) a un diamètre (d') inférieur au diamètre (d") des autres fils métalliques (12b) de ladite pluralité de fils métalliques (12).

11. Pneu (100) selon la revendication 10, dans lequel ledit au moins un premier fil métallique (12a) est agencé entre deux desdits autres fils métalliques (12b).

12. Pneu (100) selon l'une quelconque des revendications précédentes, dans lequel au moins un fil métallique de ladite pluralité desdits fils métalliques (12) est préformé de manière à s'étendre longitudinalement le long d'un trajet ondulé ou en zigzag.

13. Pneu (100) selon l'une quelconque des revendications précédentes, dans lequel la structure de carcasse (101) comprend au moins une couche de carcasse (111) ayant des bords d'extrémité opposés tournés autour de structures d'ancrage annulaires respectives (102) pour définir, sur des côtés opposés par rapport à un plan équatorial (X) du pneu (100), des structures de talon respectives (103), où chaque structure de talon (103) comprend au moins une couche de raidissement (120, 121) associée à ladite au moins une couche de carcasse (111) au niveau ou à proximité d'un bord d'extrémité tourné respectif et comportant une pluralité de câblés de renfort identiques auxdits câblés de renfort hybrides (10).
